# EUROPÄISCHE PATENTSCHRIFT

(11) **EP 0 512 144 B1**
(45) Veröffentlichungstag und Bekanntmachung des Hinweises auf die Patenterteilung: **01.02.1995**
(21) Anmeldenummer: 91107523.2
(22) Anmeldetag: 08.05.1991
(51) Int. Cl.: B01D 35/00, B01D 35/30

(54) **Brennstoffiltereinheit**
Fuel filter unit
Unité de filtre de combustible

(43) Veröffentlichungstag der Anmeldung: 11.11.1992
(73) Patentinhaber: David & Baader DBK Spezialfabrik elektrischer Apparate und Heizwiderstände GmbH, D-76870 Kandel (DE)
(72) Erfinder: Bohlender, Franz, W-6744 Kandel (DE); Weber, Thomas, W-6729 Rülzheim (DE); Bruss, Elke, W-7144 Asperg (DE); Möhle, Rolf, W-7117 Bretzfeld-Scheppach (DE)
(74) Vertreter: Grünecker, Kinkeldey, Stockmair & Schwanhäusser Anwaltssozietät

(56) Entgegenhaltungen:
- EP-A- 0 023 548
- EP-A- 0 408 377
- DE-A- 2 651 855
- DE-B- 1 134 055
- DE-U- 1 939 647
- GB-A- 841 818
- US-A- 2 225 610
- US-A- 4 083 585
- US-A- 4 660 803

## Beschreibung

Die Erfindung betrifft eine Brennstoffiltereinheit für einen Verbrennungsmotor, mit einer Dose zum Aufnehmen eines Brennstoffilters und einem mit der Dose verschraubbaren Verschlußteil, welches einen Brennstoffeinlaß- und einen Brennstoffauslaßkanal aufweist, der jeweils in eine am Verschlußteil ausgebildete Verbindungseinrichtung zum Anschließen einer Brennstoffzuführungs- bzw. Brennstoffrückführungsleitung mündet.

Brennstoffiltereinheiten der oben genannten Art werden üblicherweise bei Kraftfahrzeugen mit Dieselmotoren eingesetzt, um den in den Motor gelangenden Kraftstoff in einem ausreichenden Maße von Verunreinigungen zu befreien. Der Kraftstoff wird dazu durch einen Einlaßkanal am Verschlußteil in das Innere der Dose geführt, durchströmt den in der Dose enthaltenen Kraftstoff- bzw. Brennstoffilter und verläßt die filtereinheit über einen, ebenfalls im Verschlußteil befindlichen, Auslaßkanal in Richtung Motor.

Die Verbindung zwischen den Brennstoffzu- bzw. Brennstoffabführungsleitungen wird bei bisher üblichen Brennstoffiltereinheiten über Schraubverbinder hergestellt, die an den Enden der Ein- und Auslaßkanäle vorgesehen sind. . Als nachteilig erweist sich dabei die relativ lange Zeit, die zum Verbinden der Brennstoffleitungen mit bzw. zum Lösen der Brennstoffleitungen von der Brennstoffiltereinheit benötigt wird. Außerdem nachteilig ist, daß der Brennstoffilter im Motorraum derart placiert werden muß, daß ein genügend großer Freiraum für das Ausführen einer Schraubbewegung verbleibt.

Aus EP-A-318 832 ist eine Filtervorrichtung bekannt, bei der der Einlaß- bzw. Auslaßstutzen mit leicht lösbaren Kupplungsenden versehen ist, wodurch sich der Ein- und Auslaßkanal an einen Armaturenblock, der zwei entsprechend korrespondierende Schnellkupplungen aufweist, in einfacher Weise ankoppeln und wieder lösen läßt.

Aus US-A-4 660 803 ist eine Steckverbindung bekannt, die nach Zusammenstecken selbsttätig sichernd ist und so ausgelegt ist, daß sie an ihren freien Enden mit Kraftstoffleitungen verbunden werden kann. Eine vergleichbare Steckverbindung ist darüber hinaus aus US-A-2 225 610 bekannt.

Darüber hinaus ist aus GB-A-841 818 ein Flüssigkeitsfilter bekannt, bei dem für das Anschließen von Flüssigkeitsleitungen auf gegenüberliegenden Seiten des Filters zwei Flansche vorgesehen sind.

Der vorliegenden Erfindung liegt die Aufgabe zugrunde, eine Brennstoffiltereinheit anzugeben, bei der das Verbinden und das Lösen der Brennstoffleitung von der Filtereinheit einfach und schnell erfolgen kann.

Diese Aufgabe wird in erfindungsgemäßer Weise durch den Gegenstand des Patentanspruchs 1 gelöst.

Die erfindungsgemäße Brennstoffiltereinheit bietet den Vorteil, daß Brennstoffzuführungs- bzw. Brennstoffabführungsleitungen in einfacherer und schnellerer Weise über eine automatisch sichernde Steckverbindung mit der Brennstoffiltereinheit verbunden, bzw. von dieser gelöst werden können. Dies trägt insbesondere bei der Massenherstellung von Fahrzeugen zur Kostensenkung bei. Außerdem muß am Motorblock weniger freier Platz zum Montieren bzw. Demontieren der Brennstoffleitungen vorgesehen werden, da die Brennstoffleitungen nicht mehr angeschraubt, sondern nur noch aufgesteckt werden müssen. Dies kommt der bei modernen Motoren üblichen kompakten Motoranordnung entgegen. Der im Patentanspruch 1 verwendete Begriff "Rohrsteckverbindung" ist nicht als beschränkend auf Rohre mit kreisförmigem Querschnitt zu verstehen, sondern die innerhalb der Rohrsteckverbindung verwendeten Rohre können beliebige Querschnittsformen haben.

Die erfindungsgemäße Brennstoffiltereinheit weist darüberhinaus eine Sicherungseinrichtung auf, die als Schnappverbindung ausgebildet ist. Schnappverbindungen sind besonders einfach und kostengünstig herzustellen. Sie können robust und platzsparend ausgeführt werden. Die Schnappverbindung wird dabei derart gebildet, daß auf dem Steckverbinder wenigstens eine Auflaufschräge vorgesehen ist, und daß auf dem anderen Steckverbinder ein Federelement gelagert ist, derart, daß beim Zusammenfügen der beiden Steckverbinder das Federelement durch die Auflaufschräge gespannt wird und anschließend hinter der Auflaufschräge einrastet. Eine derartige Schnappverbindung ist einfach ausführbar und kann hohe Zugkräfte in axialer Richtung aufnehmen. Die Auflaufschrägen können dabei in auf dem anderen Steckverbinder ausgebildeten Nuten geführt werden, wodurch eine radiale Festlegung der beiden Steckverbinder zueinander ermöglicht wird.

Bei einer bevorzugten Ausführungsform der erfindungsgemäßen Brennstoffiltereinheit ist vorgesehen, daß das Federelement als eine im wesentlichen U-förmige Drahtformfeder ausgeführt ist, deren freie Enden aus der Ebene der übrigen Drahtformfeder aufgebogen sind und daß einer der Steckverbinder in Umfangsrichtung Schlitze aufweist, in die die Drahtformfeder einschiebbar ist, wobei sie sich mittels der aufgebogenen Enden an zwei an der Verbindungseinrichtung befindlichen Vorsprüngen einhakt. Durch die sich an den Vorsprüngen der Verbindungseinrichtung einhakenden aufgebogenen Enden ist die Feder zuverlässig gegen Herausfallen gesichert. Die U-förmige Gestaltung ermöglicht ein einfaches Aufstecken der Feder auf den entsprechenden Steckverbinder, sowohl vor als auch nach dem Zusammenfügen der beiden Steckverbinder.

Vorzugsweise weist der Steckverbinder, auf den die Feder aufsteckbar ist, an der Seite, von der aus die Formfeder auf diesen aufgesteckt wird, eine Einbuchtung auf, derart, daß, nachdem die Formfeder am Steckverbinder befestigt ist, zwischen der Feder und dem Steckverbinder eine Lücke verbleibt, an der die Feder zur Demontage frei zugänglich ist. Dies bietet den Vorteil, daß zum Lösen der Feder auf diese bequem mit einem Werkzeug zugegriffen werden kann. Wenn die Feder von der Verbindungseinrichtung gelöst wird, muß sie soweit gespannt werden, bis ihre aufgebogenen Enden, mittels derer sie sich an den Vorsprüngen des Steckverbinders festhakt, über diese Vorsprünge hervortreten. Um während des Spannens ein Wegspringen der Feder verhindern bzw. um die Feder anschließend herausziehen zu können, muß diese mit einem Werkzeug greifbar sein. Dies wird durch die am Steckverbinder ausgebildete Einbuchtung ermöglicht.

Schließlich weist in einer weiteren vorteilhaften Ausführungsform einer der Steckverbinder eine Bohrung mit einem Durchmesser etwa gleich dem Außendurchmesser des anderen Steckverbinders auf, derart, daß die Steckverbinder zum Verbinden ineinander einschiebbar sind und der einzuschiebende Steckverbinder weist mindestens eine auf seiner Oberfläche in Umfangsrichtung verlaufende Kerbe mit einer darin eingesetzten Gummiringdichtung auf. Durch das Ineinanderschieben der Steckverbinder und die dazwischenliegende Gummiringdichtung ist in einfacher Weise eine dichte Verbindung herstellbar.

Im folgenden wird unter Bezugnahme auf die entsprechenden Zeichnungen eine besonders bevorzugte Ausführungsform der vorliegenden Erfindung beschrieben. Dabei zeigen die Zeichnungen:
- Fig. 1: eine Seitenansicht der erfindungsgemäßen Brennstoffiltereinheit,
- Fig. 2: eine Frontansicht des mit dem Verschlußteil verbundenen Steckverbinders,
- Fig. 3: eine Draufsicht auf den mit der Brennstoffleitung zu verbindenden Steckverbinder,
- Fig. 4 und 5: jeweils eine Seitenansicht der Drahtformfeder.

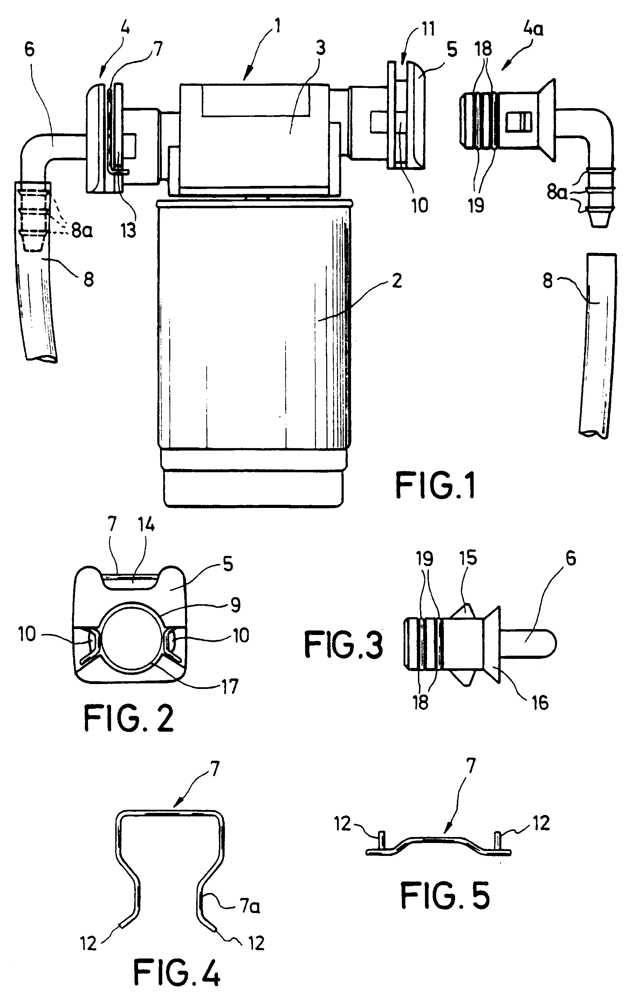

Fig. 1 zeigt das besonders bevorzugte Ausführungsbeispiel der erfindungsgemäßen Brennstoffiltereinheit 1.

Auf eine Dose 2, die zum Aufnehmen eines Brennstoffilters dient, ist ein Verschlußteil 3 aufgeschraubt. Im Inneren des Verschlußteils 3 befindet sich ein Brennstoffzuführungskanal, über den ungereinigter Kraftstoff dem Brennstoffilter zugeführt wird, sowie ein Brennstoffabführungskanal, über den der nach Durchströmen des Brennstoffilters gereinigte Kraftstoff wieder abgeführt wird. Beide Kanäle münden nach außen hin jeweils in eine Verbindungseinrichtung 4 bzw. 4a. Diese bestehen jeweils aus drei Teilen, den zwei Steckverbindern 5, 6 und einem als Drahtformfeder 7 ausgeführten Sicherungselement. Die rohrförmigen Steckverbinder sind ineinander einsteckbar. Dabei ist der direkt mit dem Verschlußteil 3 verbundene Steckverbinder 5 als Aufnehmer ausgelegt, derart, daß er eine Bohrung aufweist, die gerade das vordere Stück des als Gegenstück ausgelegten Steckverbinders 6 aufnehmen kann. Die Feder 7, der Aufnehmer 5 und das Gegenstück 6 sind derart ausgebildet, daß sie gemeinsam eine selbstsichernde Schnappverbindung bilden. Das Gegenstück 6 weist an seinem gegenüber dem vorderen Teil im rechten Winkel abgeknickten hinteren Teil konisch geformte Absätze 8a auf, durch die ein auf den hinteren Teil des Gegenstücks aufgeschobener Brennstoffzuführungs- bzw. Brennstoffabführungsschlauch 8 gegen Abrutschen gesichert wird.

Unter Bezugnahme auf die Fig. 2, 3, 4 und 5 soll im folgenden die Funktion des Schnappverschlusses genauer erläutert werden.

In Fig. 2 ist der als Aufnehmer ausgelegte und im Verschlußteil 3 integrierte Steckverbinder 5 von vorne dargestellt. Zu erkennen ist die Bohrung 9, sowie die auf der linken und rechten Seite davon eingearbeiteten Nuten 10. Die in Fig. 4 genauer dargestellte U-förmige und mit Verengungen 7a ausgestattete Drahtformfeder 7 ist gestrichelt eingezeichnet. Diese wird von oben auf den Aufnehmer 5 in einen in Umfangsrichtung und in Fig. 1 erkennbaren Schlitz 11 eingesteckt. Fig. 5 zeigt, wie die Enden 12 der Feder 7 um einen etwa rechten Winkel aus der Ebene der übrigen Feder aufgebogen sind. Mit diesen abgewinkelten Enden hakt sich die Feder nach dem Aufstecken auf den Aufnehmer 5 in die in Fig. 1 erkennbaren Vorsprünge 13 ein und ist damit gegen Herausfallen gesichert. In Fig. 2 deutlich zu erkennen ist, wie die Feder aufgrund einer Einbuchtung 14 auf der Oberseite des Aufnehmers 5 über einen gewissen Bereich frei zugänglich bleibt. Dadurch kann mit entsprechendem Werkzeug einfach auf die Feder zugegriffen werden, was insbesondere zur Demontage der Feder vom Aufnehmer wichtig ist. Die verengten Stellen 7a der Feder 7 liegen unmittelbar vor den Nuten 10 und werden beim Einschieben des in Fig. 3 von oben dargestellten Gegenstücks 6 durch die sich am Gegenstück 6 auf gegenüberliegenden Seiten befindlichen nasenförmigen Auflaufschrägen 15 allmählich nach außen gedrückt, um, nachdem das Gegenstück vollständig in den Aufnehmer eingeschoben ist, hinter den Auflaufschrägen einzurasten und damit das Gegenstück gegen axiale Zugbelastung zu sichern. Das Gegenstück 6 ist vollständig in den Aufnehmer 5 eingeschoben, sobald der konische Absatz 16 in Fig. 3 an dem passend ausgefrästen Eingang der Bohrung 9 in Fig. 2 anstößt. Während des Einschiebens des Gegenstücks 6 in den Aufnehmer 5 werden die Auflaufschrägen 15 in den Nuten 10 geführt. Durch das Eingreifen der Auflaufschrägen in den Nuten wird das Gegenstück radial festgelegt.

Die beschriebene Schnappverbindung ist so ausgelegt, daß die Feder 7 auch nachträglich, d.h. nachdem sich das Gegenstück bereits im Aufnehmer befindet, aufgesteckt werden kann und die Verbindung zuverlässig sichert.

Wie aus Fig. 3 ersichtlich ist, weist das Gegenstück 6 in Umfangsrichtung zwei Kerben 18 auf, in die Gummiringdichtungen 19 eingesetzt sind. Dadurch wird ein zuverlässiges Abdichten der Steckverbindung erreicht. Der Aufnehmer 5 und das Gegenstück 6 sind derart symmetrisch ausgeführt, daß das Gegenstück in zwei sich um eine Drehung um 180^{o} unterscheidende Positionen in den Aufnehmer eingesteckt werden kann. Das Material für das Verschlußteil 3, den Aufnehmer und das Gegenstück ist vorzugsweise Plastik.

## Patentansprüche

1. Brennstoffiltereinheit für einen Verbrennungsmotor, mit einer Dose (2) zum Aufnehmen eines Brennstoffilters und einem mit der Dose verschraubbaren Verschlußteil (3), welcher einen Brennstoffeinlaß- und einen Brennstoffauslaßkanal aufweist, die jeweils in eine am Verschlußteil ausgebildete Verbindungseinrichtung (4, 4a) zum Anschließen einer Brennstoffzuführungs- bzw. Brennstoffabführungsleitung (8) münden, wobei jede der Verbindungseinrichtungen (4, 4a) eine Rohrsteckverbindung aufweist, bei der ein Steckverbinder (5) fest mit dem Verschlußteil (3) verbunden ist und der andere Steckverbinder (6) derart ausgebildet ist, daß er mit der Brennstoffzuführungs- bzw. Brennstoffabführungsleitung (8) verbindbar ist und wobei auf dem einen Steckverbinder (6) wenigstens eine Auflaufschräge (15) vorgesehen ist und auf dem anderen Steckverbinder (5) ein Federelement (7) gelagert ist, derart, daß beim Zusammenfügen der beiden Steckverbinder das Federelement (7) durch die Auflaufschräge (15) gespannt wird und anschließend hinter der Auflaufschräge einrastet.

2. Brennstoffiltereinheit nach Anspruch 1, **dadurch gekennzeichnet**, daß das Federelement als eine im wesentlichen U-förmige Drahtformfeder (7) ausgeführt ist, deren freie Enden (12) aus der Ebene der übrigen Drahtformfedern aufgebogen sind und daß einer der Steckverbinder (5) in Umfangsrichtung Schlitze (11) aufweist, in die die Drahtformfeder (7) einschiebbar ist, wobei sie sich mittels der aufgebogenen Enden (12) an zwei an dem Steckverbinder befindlichen Vorsprüngen (13) einhakt.

3. Brennstoffiltereinheit nach Anspruch 2, **dadurch gekennzeichnet**, daß der Steckverbinder (5), auf den die Feder (7) aufsteckbar ist, an der Seite, von der aus die Formfeder auf diesen aufgesteckt wird, eine Einbuchtung (14) aufweist, derart, daß, nachdem die Formfeder (7) am Steckverbinder (5) befestigt ist, zwischen der Feder (7) und dem Steckverbinder (5) eine Lücke verbleibt, an der die Feder zur Demontage frei zugänglich ist.

4. Brennstoffiltereinheit nach einem der Ansprüche 1 bis 3, **dadurch gekennzeichnet**, daß einer der Steckverbinder (5) eine Bohrung mit einem Durchmesser etwa gleich dem Außendurchmesser des anderen Steckverbinders (6) aufweist, derart, daß die Steckverbinder zum Verbinden ineinander einschiebbar sind und daß der einzuschiebende Steckverbinder (6) mindestens eine auf seiner Oberfläche in Umfangsrichtung verlaufende Kerbe (18) mit einer darin eingesetzten Gummiringdichtung (19) aufweist.

## Claims

1. Fuel filter unit for an internal combustion engine, having a box (2) for receiving a fuel filter and a sealing member (3) which is connectable to the box with screw fixings and has a fuel inlet and a fuel outlet channel, each opening into a connecting element (4, 4a) formed on the sealing member for the connection of a fuel supply or discharge line (8) respectively, each of the connecting devices (4, 4a) having a pipe plug-in connection, wherein one plug-in connector (5) is rigidly connected to the sealing member (3) and the other plug-in connector (6) is so formed that it is connectable to the fuel supply or discharge line (8), and wherein at least one stop slope (15) is provided on one of the plug-in connectors (6) and a spring element (7) is mounted on the other plug-in connector (5), in such a manner that when the two plug-in connectors are joined together the spring element (7) is stressed by the stop slope (15) and then engages behind the stop slope.

2. Fuel filter unit according to claim 1, characterised in that the spring element is formed as a substantially U-shaped wire moulded spring (7) whose free ends (12) are bent up out of the plane of the remaining wire moulded springs, and in that one of the plug-in connectors (5) has slots (11) in the circumferential direction, into which the wire moulded spring (7) is insertable, the spring (7) hooking into two projections (13) disposed on the plug-in connector by means of the bent-up ends (12).

3. Fuel filter unit according to claim 2, characterised in that the plug-in connector (5) on which the spring (7) is mountable has on the side from which the moulded spring is mounted thereon a recess (14), such that after the moulded spring (7) has been fixed to the plug-in connector (5), a gap is left between the spring (7) and the plug-in connector (5), via which gap the spring is freely accessible for dismantling.

4. Fuel filter according to one of claims 1 to 3, characterised in that one of the plug-in connectors (5) has a bore with a diameter approximately equal to the outer diameter of the other plug-in connector (6), so that the plug-in connectors interlock for the purpose of joining and the plug-in connector (6) to be inserted has at least one notch (18) in its surface extending in the circumferential direction with a rubber sealing ring (19) inserted therein.

## Revendications

1. Unité de filtrage de carburant pour un moteur à combustion interne, comportant une boîte (2) pour recevoir un filtre à carburant et une pièce d'obturation (3) qui peut se visser sur la boîte et présente un canal d'entrée du carburant et un canal de sortie du carburant dont chacun débouche dans un dispositif de liaison (4, 4a), formé sur la pièce d'obturation, pour raccordement à une conduite (8) d'amenée du carburant ou d'évacuation du carburant, chacun des dispositifs de liaison (4, 4a) présentant une liaison tubulaire enfichable dans le cas de laquelle un raccord enfichable (5) est rigidement relié à la pièce d'obturation (3) et l'autre raccord enfichable (6) est conçu de façon qu'il puisse se relier avec la conduite (8) d'amenée du carburant ou d'évacuation du carburant et au moins une coupe oblique d'approche (15) étant prévu sur le premier raccord enfichable (6) et un élément élastique (7) étant placé sur l'autre raccord enfichable (5), de façon que, lors du jonctionnement des deux raccords enfichables, l'élément élastique (7) soit contraint par la coupe oblique d'approche (15) et se crante ensuite derrière la coupe oblique d'approche.

2. Unité de filtrage de carburant selon la revendication 1, caractérisée par le fait que l'élément élastique est réalisé sous forme d'un ressort de forme en fil rigide (7), sensiblement en forme de U, dont les extrémités libres (12) sont redressées hors du plan du reste du ressort de forme en fil rigide et que l'un des raccords enfichables (5) présente, en direction périphérique, des rainures (11) dans lesquelles le ressort de forme en fil rigide (17) peut s'enfiler, ce par quoi il se crante, par les extrémités redressées (12) contre deux saillies (13) se trouvant sur le raccord enfichable.

3. Unité de filtrage de carburant selon la revendication 2, caractérisé par le fait que le raccord enfichable (5) sur lequel le ressort (7) peut s'enficher présente un crénelage (14) du côté par lequel on enfiche le ressort de forme sur ce raccord, de façon qu'après que le ressort de forme (7) soit fixé sur le raccord de forme (5), il subsiste, entre le ressort (7) et le raccord enfichable (5), un jeu par lequel on peut librement accéder au ressort pour le démontage.

4. Unité de filtrage de carburant selon l'une des revendications 1 à 3, caractérisé par le fait que l'un des raccords enfichables (5) présente un alésage d'un diamètre à peu près égal au diamètre extérieur de l'autre raccord enfichable (6) de façon que les raccords enfichables puissent s'enfiler l'un dans l'autre pour la liaison et que le raccord enfichable à enfiler (6) présente au moins une encoche (18) qui parcourt sa surface dans la direction périphérique, avec une garniture annulaire d'étanchéité en caoutchouc (19) qui y est insérée.
